Europäisches Patentamt

European Patent Office

Office européen des brevets

(11) Publication number: **0 427 886 A1**

# EUROPEAN PATENT APPLICATION

(21) Application number: 89121219.3

(22) Date of filing: 16.11.89

(51) Int. Cl.5: **B21D 5/01**, B21D 5/04, B29C 53/04

The title of the invention has been amended (Guidelines for Examination in the EPO, A-III, 7.3).

(43) Date of publication of application:
**22.05.91 Bulletin 91/21**

(84) Designated Contracting States:
**DE ES FR GB IT SE**

(71) Applicant: UEMURA METAL INDUSTRIES CO., LTD.
8-1, Shinke 1-chome
Neyagawa City Osaka Prefecture(JP)

(72) Inventor: Mitsuo, Matsuoka
8-25-3 Korigaoka, Hirakata City
Osaka Prefecture(JP)

(74) Representative: Henkel, Feiler, Hänzel & Partner
Möhlstrasse 37
W-8000 München 80(DE)

(54) Die for negative angle forming.

(57) In a die, a vertical linear motion of the die is converted into a rotating motion, thereby rotating a cylindrical cam member to form a forming portion which enters from a descending locus of the upper die into the lower die, and a cam member is rotated and retreated to the state where a work cam be taken out from the lower die after forming.

FIG 2

EP 0 427 886 A1

**DIE**

## SUMMARY OF THE INVENTION

Industrial Field of Application

The present invention relates to a die for forming such as sheet metals of 0.1 to 10mm thick, plastics and die casts.

Prior Art and Problems that the Invention is to solve

Negative angle forming of sheet metals, plastics and die casts is usually performed by using a slide cam.

By the way, the negative angle forming referred herein denotes a processing in which, when a work placed on a lower die is formed by descending an upper die vertically for abutment, a formed portion enters from a descending locus of the upper die into the lower die.

In the conventional negative angle forming of the sheet metals plastics and die casts, the work is placed on the lower die and processed laterally by descending the upper die vertically and driving a driven cam of the lower die. When the processing is finished and the upper die is ascended, the passive cam was retreated by means of a spring. In this case, a former of the driven cam which forms the work by sliding thereon laterally from outside, is formed into a unit shape as same as a forming shape of the work. However, a former of the lower die whereon the work is placed, must be made possible to take out the work by dividing and retreating a negative angle portion into which the lower die has entered on by deleting the negative angle portion, since the work must be taken out from the lower die after the processing.

It is not so problematic if the degree of negative angle is small. However, when the degree of negative angle is large or, for example, when the work takes the form of elongated frame with grooved section such as a front-pillar outer of automotive sheet metal parts, since the groove width of the work is narrow, if the negatively angled lower die is divided or deleted, it can not be shaped distinctly only by the pressure of the driven can, and also the lower die strength is deteriorated and the negative angle forming was practically impossible.

In the negative angle forming by the slide cam, though the driven can is guided and slid a long distance by a drive can of the upper die, it is not always simple to move the driven can repetitively to a predetermined position accurately because a guide member is not always used for smooth guidance, thus a product is hardly stable in quality and besides the torsion and strain may occur to necessitate correction of the product.

The correction of products having tree-dimensional curved surfaces and lines such as parts constituting the automobile body plate like the front-pillar outer is practically impossible. Assembling the torsional or strained parts with the other parts by welding results in a poor connection therebetween, thus a high quality sheet metal structure of the automobile can not be provided and a predetermined product accuracy of the sheet metal forming can not be maintained.

When the slide cam is used, a large driven cam and heel must be provided on the side of the lower die where the work is placed, or the moving area of the driven cam is necessitated, thus the lower die area becomes larger and heavier, results in expensive dies.

Means of solving the Problems

In order to solve the problems aforementioned, the present invention is directed to solve these problems on the basis of an unprecedented novel idea of converting the linear vertical motion of mass-production equipments into the rotating motion.

## BRIEF DESCRIPTION OF THE DRAWINGS

The drawings show a specific embodiment of the present invention, in which

Fig. 1 is a perspective view of an automotive front-pillar outer processed by press dies of the present invention,

Fig. 2 is a longitudinal sectional view of press dies,

Fig. 3 is a plan view of its lower die,

Fig. 4 is a plan view of its upper die,

Fig. 5 is side view of a slide cam,

Fig. 6 is sectional view taken along the line VI-VI of Fig. 5,

Fig. 7 is a sectional view taken along the line VII-VII of Fig. 5, and

Fig. 8 is a longitudinal sectional view of press dies for a front-door trim base of automotive sheet metal parts of another embodiment.

## DETAILED DESCRIPTION OF THE INVENTION

In the following, the present invention will be described in detail on the basis of a specific embodiment shown in the accompanying drawings.

First Embodiment

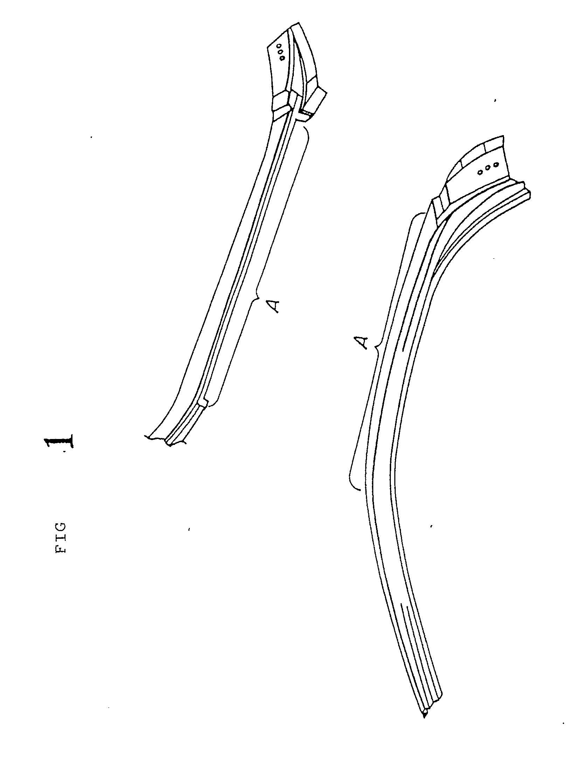

Fig. 1 shows a schematic view of right and left finished front-pillar outers which are automotive sheet metal parts formed by press dies of the present invention. In the figure, the lower one is for the right and the upper one is for the left.

The front-pillar outer is a portion of a front-door frame and also a portion of a front-glass frame. Moreover, it constitutes a portion of a frame supporting a roof panel. Since the front-pillar outer is connected to various parts as such, it requires a severe product accuracy. If such an accuracy is not satisfied, the sheet metal body of a good quality can not be provided.

The front-pillar outer includes three-dimensional curved surfaces and lines since it constitutes an automobile body.

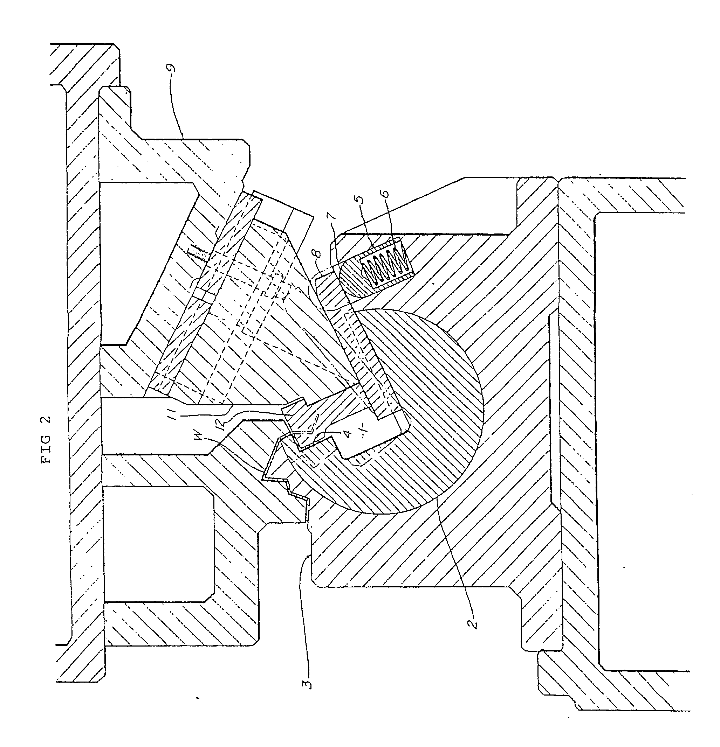

A portion which is subject to a negative angle forming by the press dies is indicated at A and has the length of about 750mm, a section of which is shown as a work W in Fig. 2. That is, after the negative angle forming, the work W is formed into the state shown by a solid line from the state shown by a two-dot chain line.

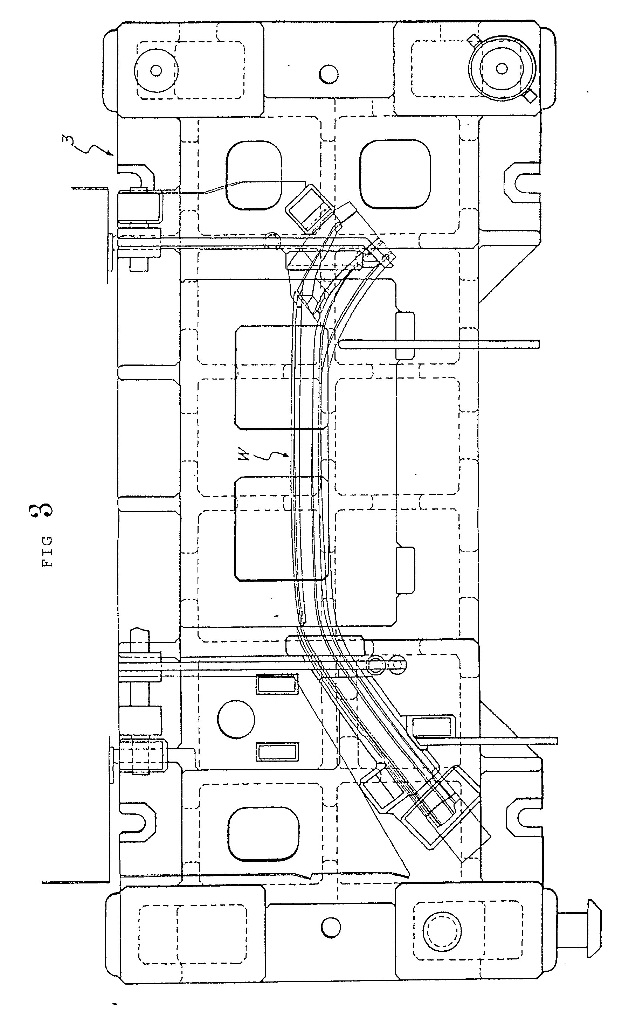

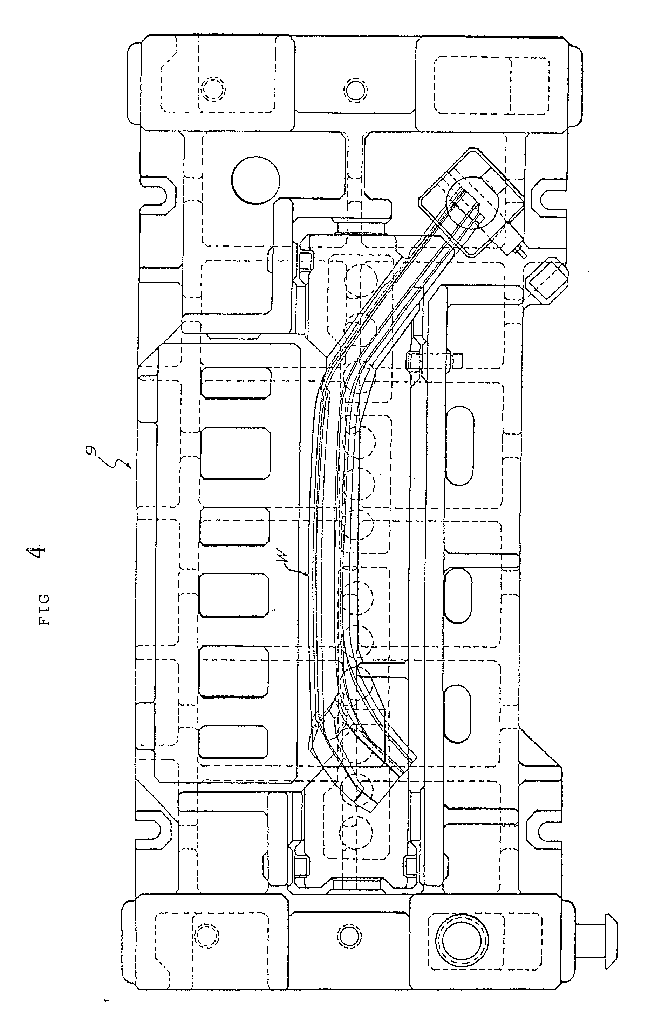

By the way, in the press forming, first the drawing takes place. Then, the peripheral trimming is performed to the state shown by the two-dot chain line. As the next third process, the press dies of the present forming process is used. Fig. 3 shows a plan view of its lower die and Fig. 4 shows a plan view of its lower die and Fig. 4 shows that of the upper die.

A cylindrical cam member 2 provided with a groove 1 axially on its peripheral wall is disposed rotatably on the lower die 3, whose upper surface is shaped so as to be able to receive the work W. A negative angle former 4 is formed on the edge of the groove 1 of the cam member 2 near the upper face of the lower die 3.

An auto-return device 5 which rotates and retreats the cam member 2 to the state shown by the two-dot chain line so as to take out the work W from the lower die after forming is embedded in the lower die 3.

In the auto-return device 5 of the present embodiment, a push pin 7 urged by a coil spring 6 is contacted to the lower end face of a pivoting plate 8 secured to the other edge of the groove 1 of the cam member 2.

As the auto-return device 5, an air-pressure or hydraulic pressure device or a link mechanism may be used.

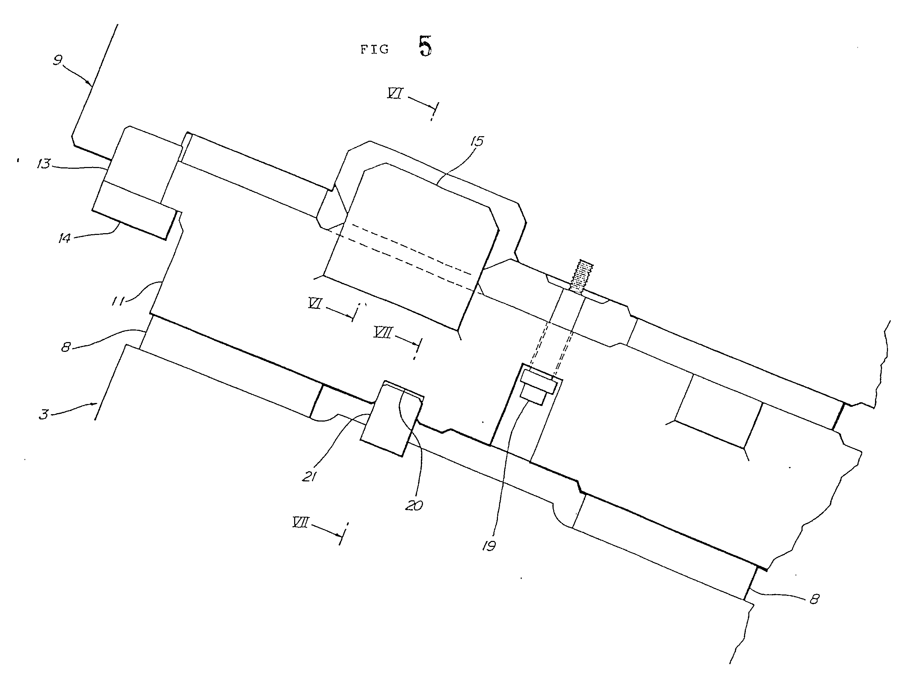

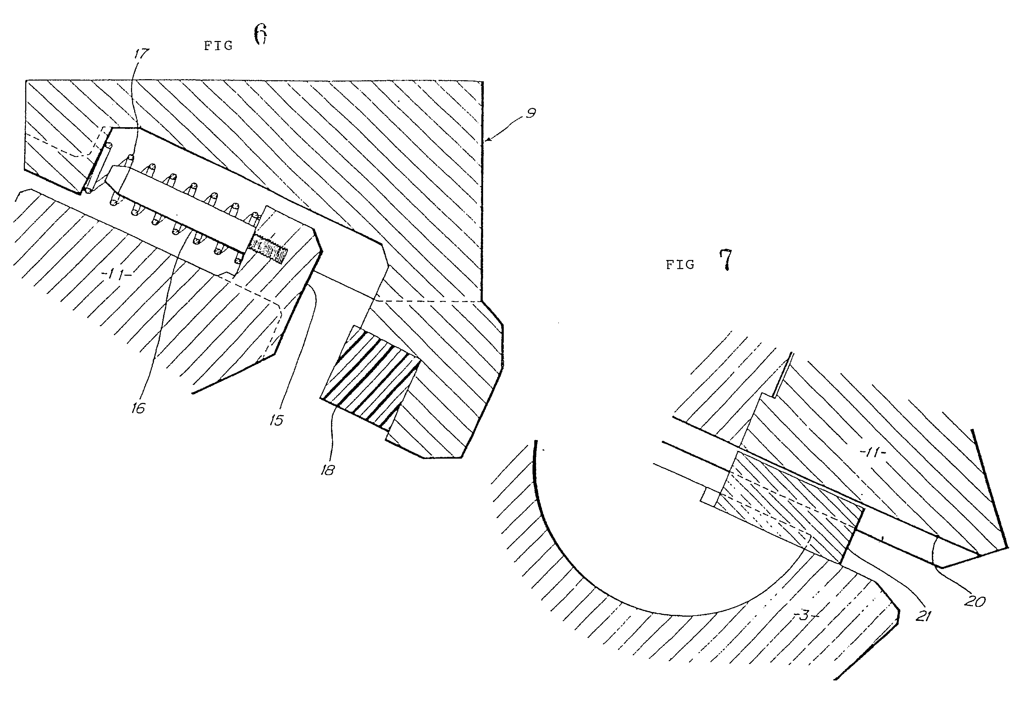

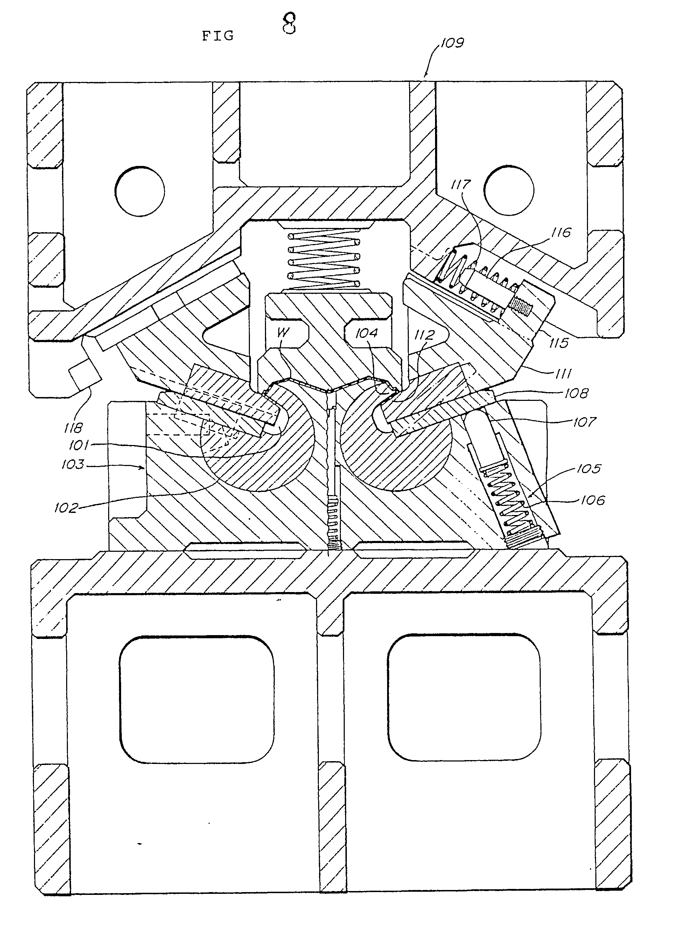

Meanwhile, an actuating cam 11 sliding on the position opposing the cam member 2 is provided on an upper die 9. As shown in Fig. 2 and Figs. 5 to 7, the actuating cam 11 is formed with a negative angle former 12 at a lower end, guided by a side guide 13 and a lower guide 14 and urged externally of the die by a coil spring 17 provided around a positioning pin 16 between a seat 15 of the actuating cam 11 and the upper die 9.

The numeral 18 generally indicates a urethane rubber buffer and 19 denotes a safety suspension bolt of the actuating cam 11. Positioning of the actuating cam 11 against the lower die 3 is effected by engaging two positioning grooves 20 provided on its lower surface to positioning keys 21 projected at the positions of the lower die 3 opposing thereto.

Next, the operation of the press dies will be described.

The upper die 9 is positioned at a top dead center and a work W is placed on the lower die 3. In Fig. 2, the work W is in the state shown by the two-dot chain line, and the cam member 2 is pivoted and retreated to the state shown by the two-dot chain line by the auto-return device 5. The upper die 9 is positioned at the top dead center of a pressing machine above the state shown in the figure.

The upper die 9 starts to descend from the top dead center, and first the lower face of the actuating cam 11 is contacted to the pivoting plate 8 without interfering the negative angle former 4 of the cam member 2, which is rotated clockwise in Fig. 2.

As the upper die 9 continues to descend further, the actuating cam 11 urged externally of the die is moved laterally or leftward in Fig. 2 to the state shown by the solid line in the figure of the cam action against the urging force of the coil spring 17, thereby the work W is formed as shown by the solid line in Fig. 2 by the negative angle former 4 of the cam member 2 pivoted and the negative angle former 12 of the actuating cam 11.

After the negative angle forming, the upper die 9 starts to ascend. The actuating cam 11 is urged externally of the die by the coil spring 17, moved rightward in Fig. 2 and ascended without interfering the work W formed.

Meanwhile, the cam member 2 is rotated counterclockwise in Fig. 2 to the state shown by the two-dot chain line by the auto-return device 5, since the actuating cam 11 which has restrained is ascended, so that the work W formed can be taken out from the lower die 3 without interfering the negative angle former 4 of the cam member 2.

## Second Embodiment

Fig. 8 shows an example of press dies for forming a front-door trim base which is automotive sheet metal parts of another embodiment.

In the figure, the reference character W indicates a work, 101 is a groove, 102 is a cam member, 103 is a lower die, 104 is a negative angle former of the cam member 102, 105 is an auto-return device, 106 is a coil spring, 107 is a push pin, 108 is a pivoting plate, 111 is an actuating cam, 112 is a negative angle former of the actuating cam 111, 115 is a seat, 116 is a positioning pin and 117 is a coil spring.

In the embodiment aforementioned, though the sheet metal parts of the automobile has been described, the present invention is not limited thereto, it is also applicable to the forming of the other sheet metals, plastics and die casts.

## Effects of the Invention

As described heretofore, in the present invention, a negative angle forming portion is processed by converting the linear motion into the rotating motion, whereby the negative angle forming of the sheet metals, plastics and die casts, in particular, the forming in the case of large negative angle portion or the case wherein the sheet metal, plastic and die cast products are elongated frame having three-dimensional curved surfaces is possible.

In addition, since the cam member is rotated, it is not necessary to be divided or deleted to avoid interference, thus a sufficient strength can be given to the dies to allow forming with a strong thrust. Accordingly, the distorsion and strain can be eliminated from the products having three-dimensional curved surfaces, so that no correction is required after processing, improving the product accuracy considerably and removing troubles when assembled.

Since the die itself has a sufficient strength, it is almost not necessary to be repaired as the conventional slide cam.

Furthermore, in the prior art slide cam die, a wide area was required on the side of the lower die where a work is placed, but in the press die of the present invention, a cam member is disposed directly on the lower cam where the work is placed, so that a small and compact metal die area is realized, results in a light and inexpensive press die.

## Claims

(1) A die having a former which is negatively angled when an upper die is moved linearly against a lower die for forming, wherein a cylindrical cam member provided with a groove axially on its peripheral wall is disposed rotatably on the lower die to form a negative angle former on the grooved edge of the cam member, a cam having the negative angle former being installed on the upper die oppositely to said cam member, and an auto-return device is provided on the lower die to rotate and retreat the cam member to the state where a work cam be taken out from the lower die after forming.

EP 0 427 886 A1

FIG 1

*A*

*A*

FIG 2

FIG 3

FIG 4

EP 0 427 886 A1

FIG 5

EP 0 427 886 A1

FIG 6

FIG 7

EP 0 427 886 A1

FIG 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 10, no. 2 (M-444)[2059], 8th January 1986; & JP-A-60 166 122 (UEMURA KINZOKU KOGYO K.K.) 29-08-1985 * Abstract; figures 1-8 * | 1 | B 21 D    5/01 <br> B 21 D    5/04 <br> B 29 C   53/04 |
| Y | US-A-2 362 006  (HERZOG) | 1 | |
| Y | PATENT ABSTRACTS OF JAPAN, vol. 9, no. 84 (M-371)[1807], 13th April 1985; & JP-A-59 212 129 (FURUKAWA ARUMINIUMU KOGYO K.K.) 01-12-1984 | 1 | |
| A | EP-A-0 106 124  (KARL MEINIG KG) * Abstract; figures 1-5; claim 1 * | 1 | |
| | | | TECHNICAL FIELDS SEARCHED (Int. Cl.5) |
| | | | B 21 D <br> B 29 C |

The present search report has been drawn up for all claims

| Place of search | Date of completion of the search | Examiner |
|---|---|---|
| THE HAGUE | 16-06-1990 | SUENDERMANN R.O. |